# EUROPEAN PATENT APPLICATION

(11) **EP 1 270 637 A1**
(43) Date of publication of application: **02.01.2003**
(21) Application number: 00979020.5
(22) Date of filing: 29.11.2000
(51) Int. Cl.: C08G 63/137, C08J 5/00, C08J 7/04, C08L 101/00

(54) **POLYESTER AND POLYMER MODIFIER COMPRISING THE POLYESTER AS ACTIVE INGREDIENT**

(30) Priority: 29.11.1999 JP 33758199
(71) Applicant: Zeon Corporation, Tokyo 100-0005 (JP)
(72) Inventor: Kitahara, Shizuo Zeon Corporation, Kawasaki-shi, Kanagawa 210-9507 (JP); Hayashi, Atsushi Zeon Corporation, Kawasaki-shi, Kanagawa 210-9507 (JP); Ikeda, Shinya Zeon Corporation, Kawasaki-shi, Kanagawa 210-9507 (JP)
(74) Representative: VOSSIUS & PARTNER
(86) International application number: JP0008434
(87) International publication number: WO01040350

(57) **Abstract**

A polyester having a weight average molecular weight of 10,000 to 200,000, a hydroxyl value of 30 to 200 mgKOH/g, an acid value of not larger than 5 mgKOH/g and a glass transition temperature of 35 to 60°C, which is obtained by polycondensing a polycarboxylic acid ingredient comprising as a principal ingredient a polycarboxylic acid compound selected from alicyclic polycarboxylic acids and anhydrides thereof, which have a carboxyl group at each of two adjacent carbon atoms, with a polyhydric alcohol ingredient comprising as principal ingredients an alkylene glycol having 2 or 3 carbon atoms and a tetrahydric or higher-hydric alcohol. By incorporating a modifier for polymer, comprising this polyester as an effective ingredient, in a polymer a polymer composition is obtained which gives a shaped article exhibiting improved adhesion to a thermosetting resin.

## Description

### Technical Field

This invention relates to a novel polyester. More particularly, it relates to a novel polyester capable of giving a polymer such as resin or rubber exhibiting improved adhesion to a coating liquid or an adhesive by incorporating the polyester in the polymer.

### Background Art

Polyolefin resins such as polypropylene and olefin rubbers such as an ethylene-propylene copolymer rubber (polyolefin resins and olefin rubbers are hereinafter collectively referred to as "polyolefins" when appropriate) have good physical properties and are relatively cheap, and thus, are widely used. However, polyolefins have no polar group, and therefore, when the surfaces of shaped articles of polyolefins are coated with a coating liquid, adhesion of the coating liquid to the surfaces is poor. Further, when shaped articles of polyolefins are adhered with an adhesive, for example, to a shaped article of cured rubber, a practically acceptable adhesive strength cannot be obtained.

To obviate the above-mentioned defects of polyolefins, several attempts were proposed. For example, there were proposed a method of incorporating polyhydroxy-polybutadiene in a polyolefin, in which polyhydroxy-polybutadiene at least 98% of the unsaturated bonds in the backbone chain have been hydrogenated (Japanese Examined Patent Publication No. S57-7462); a method of incorporating a hydrocarbon polymer having hydroxyl groups in the molecular structure such as polyhydroxypolyolefins, in a polyolefin (Japanese Unexamined Patent Publication [hereinafter abbreviated to "JP-A"] No. H1-197534); and a method of incorporating low-molecular-weight polyisoprene in a polyolefin, in which polyisoprene at least 50% of the double bonds in the backbone chain have been hydrogentated (JP-A H2-69545). By these proposed methods, polyolefins exhibiting improved adherence upon coating (hereinafter referred to as "coating adherence") and giving a coating having improved solvent resistance, are obtained. However, the polyester-incorporated polyolefins have poor mechanical strengths such as poor flexural modulus.

Further, to modify a surface of a polyolefin, there were proposed a method of incorporating a polycarbonate diol as a modifier in a polyolefin (JP-A H6-172596); and a method of incorporating a polyether-ester-diol compound prepared by ring-opening polymerization of a lactone with ethylene glycol, as a modifier in a polyolefin (JP-A H6-116472). However, the modifiers used in these proposed methods have poor compatibility with polyolefins, and thus, the coating adherence is improved not to a sufficient extent.

To improve the coating adherence of polypropylene, a proposal was made wherein polypropylene is incorporated with a high-molecular-weight and high-hydroxyl-value polyester produced from an alicyclic carboxylic acid having a molecular structure having a carboxylic group at each of two adjacent carbon atoms, and a polyhydric alcohol comprising a hindered glycol (WO99/51660). However, a shaped article of polypropylene having a further improved coating adherence and improved mechanical strengths is desired.

A polyester produced by polycondensation of methyltetrahydrophthalic acid or its anhydride with an alkylene glycol was proposed as a polyester used as a modifier (JP-A S55-82114, JP-A S56-152835 and JP-A H7-292340). However, this polyester has a low molecular weight and a low hydroxyl value, and therefore, its performance as a surface modifier for improving coating adherence is not sufficient. Further, a high-molecular-weight polyester produced by polycondensing methyltetrahydrophthalic acid or its anhydride with an alkylene glycol comprising 2-methyl-1,3-propanediol as indispensable ingredient was proposed (JP-A H5-86173). This polyester has also a low hydroxyl value and a too low softening point to modify a polyolefin and is liable to form a non-uniform mixture when it is mixed together with a polyolefin.

### Disclosure of the Invention

In view of the foregoing state of prior art, primary objects of the present invention are to provide a novel polyester which is useful as a modifier for improving adherence of a shaped article made of, for example, a polyolefin to a coating liquid or an adhesive; a modifier for a polymer, which comprises the novel polyester as the effective ingredient; a polymer composition comprising the modifier for polymer and a polymer to be modified; a shaped article made by shaping the polymer composition; and a coated article made by coating a surface of the shaped article with a thermosetting resin.

To achieve the above-mentioned objects, the present inventors made intensive researches and found that a polyester obtained by polycondensing an alicyclic polycarboxylic acid or its anhydride with a polyhydric alcohol ingredient comprising a specific dihydric alcohol and a tetrahydric or higher-hydric alcohol is a novel substance which has not been described in any literature and has excellent performance for improving the coating adherence of a polymer such as a polyolefin without reduction of mechanical properties of the polymer. On the basis of this finding, the present invention has been completed.

Thus, in a first aspect of the present invention, there is provided a polyester which is obtained by polycondensing a polycarboxylic acid ingredient with a polyhydric alcohol ingredient, wherein said polycarboxylic acid ingredient comprises as a principal ingredient a polycarboxylic acid compound selected from alicyclic polycarboxylic acids and anhydrides thereof, which have a carboxyl group at each of two adjacent carbon atoms, and said polyhydric alcohol ingredient comprises as principal ingredients an alkylene glycol having 2 or 3 carbon atoms and a tetrahydric or higher-hydric alcohol; and said polyester has a weight average molecular weight in the range of 10,000 to 200,000, a hydroxyl value in the range of 30 to 200 mgKOH/g, an acid value of not larger than 5 mgKOH/g and a glass transition temperature in the range of 35 to 60°C.

In a second aspect of the present invention, there is provided a modifier for a polymer, which comprises the above-mentioned polyester as an effective ingredient.

In a third aspect of the present invention, there is provided a polymer composition, which comprises the above-mentioned modifier and a polymer to be modified.

In a fourth aspect of the present invention, there is provided a shaped article made by shaping the above-mentioned polymer composition.

In a fifth aspect of the present invention, there is provided a coated article made by shaping the above-mentioned polymer composition, and then, coating a surface of the thus-made shaped article with a thermosetting resin.

### Best Mode for Carrying Out the Invention

The present invention will now be described in detail.

The polyester of the present invention is produced by polycondensing a polycarboxylic acid ingredient comprising as a principal ingredient a polycarboxylic acid compound selected from alicyclic polycarboxylic acids and anhydrides thereof, which have a carboxyl group at each of two adjacent carbon atoms (said alicyclic polycarboxylic acid is hereinafter referred to as "vicinal polycarboxylic acid" when appropriate), with a polyhydric alcohol ingredient comprising as principal ingredients an alkylene glycol having 2 or 3 carbon atoms and a tetrahydric or higher-hydric alcohol; and the polyester has a weight average molecular weight in the range of 10,000 to 200,000, a hydroxyl value in the range of 30 to 200 mgKOH/g, an acid value of not larger than 5 mgKOH/g and a glass transition temperature in the range of 35 to 60°C.

The weight average molecular weight of the polyester is preferably in the range of 15,000 to 100,000 and more preferably 20,000 to 50,000. If the weight average molecular weight is smaller than 10,000, the improvement of adherence is not to a desired extent. In contrast, if the molecular weight exceeds 200,000, the improvement of coating adhesion tends to be insufficient.

The hydroxyl value of the polyester is preferably in the range of 40 to 100 mgKOH/g and more preferably 45 to 75 mgKOH/g. In the case where the hydroxyl value is in the range of 30 to 200 mgKOH/g, when the polyester is incorporated in a polyolefin or other polymers, the coating adherence and adhesion of the polyolefin or other polymers are highly improved.

The acid value of the polyester is not larger than 5 mgKOH/g, preferably not larger than 4 mgKOH/g and more preferably not larger than 3 mgKOH/g. If the acid value is too large, when the polyester is incorporated in a polyolefin or other polymers, the color tone of a coating formed on the polyester-incorporated polymers tends to be changed.

The glass transition temperature of the polyester is in the range of 35 to 60°C, preferably 36 to 55°C and more preferably 37 to 50°C. If the glass transition temperature is too low, the polyester tends to become difficult to uniformly disperse in a polyolefin and other polymers. In contrast, if the glass transition temperature is too high, the polyester-incorporated polymer occasionally has poor impact strength.

The softening point of the polyester is preferably 10°C or higher, more preferably in the range of 30 to 200°C, especially preferably 50 to 150°C and most preferably 80 to 100°C.

Further, in view of the miscibility with a polyolefin and other polymers, a solution of the polyester preferably exhibits a light transmittance of at least 80%, more preferably at least 85%, as measured by the method described in the working examples given below.

The alicyclic ring in the vicinal polycarboxylic acid includes, for example, a cyclohexane ring, a cyclohexene ring, a norbornane ring, a norbornene ring, tricyclodecane ring, a tricyclodecene ring and an adamantane ring.

The vicinal polycarboxylic acid is preferably an alicyclic dicarboxylic acid, and, as specific examples thereof, there can be mentioned hexahydrophthalic acid; tetrahydrophthalic acid; alkylhexahydrophthalic acids such as cis-3-alkylcyclohexane-1,2-dicarboxylic acids, trans-3-alkylcyclohexane-1,2-dicarboxylic acids, cis-4-alkylcyclohexane-1,2-dicarboxylic acids and trans-4-alkylcyclohexane-1,2-dicarboxylic acids; alkyltetrahydrophthalic acids such as cis-3-alkyl-4-cyclohexene-cis-,cis-1,2-dicarboxylic acids, cis-3-alkyl-3-cyclohexene-cis-,cis-1,2-dicarboxylic acids, trans-3-alkyl-4-cyclohexene-cis-,cis-1,2-dicarboxylic acids, trans-3-alkyl-2-cyclohexene-cis-,cis-1,2-dicarboxylic acids, 4-alkyl-4-cyclohexene-cis-,cis-1,2-dicarboxylic acids and 4-alkyl-1-cyclohexene-cis-,cis-1,2-dicarboxylic acids; and 3,6-endomethylene-cyclohexane-1,2-dicarboxylic acid, 3,6-endomethylene-1,2,3,6-tetrahydrophthalic acid, 2-methyl-3,6-endomethylene-1,2,3,6-tetrahydrophthalic acid, 3-methyl-3,6-endomethylene-1,2,3,6-tetrahydrophthalic acid and decalin-2,6-dicarboxylic acid. The term "alkyl" contained in these alicyclic dicarboxylic acids means an alkyl group having 1 to 8 carbon atoms such as methyl, ethyl, propyl, hexyl and octyl. As specific examples of the anhydrides of vicinal polycarboxylic acids, there can be mentioned anhydrides corresponding to the above-recited polycarboxylic acids.

Among the above-recited alicyclic dicarboxylic acids, alkylhexahydrophthalic acids, alkyltetrahydrophthalic acids and anhydrides thereof are preferable because of high affinity to a polyolefin and other polymers. Of these, 3-alkylcyclohexane-1,2-dicarboxylic acids, 4-alkylcyclohexane-1,2-dicarboxylic acids, 3-alkyl-4-cyclohexene-1,2-dicarboxylic acids, 4-alkyl-4-cyclohexene-1,2-dicarboxylic acids, and anhydrides thereof are especially preferable. Those which have a methyl group as the alkyl group are most preferable.

The polycarboxylic acid ingredient may contain polycarboxylic acid compounds, other than the vicinal polycarboxylic acids and anhydrides thereof. As specific examples of the polycarboxylic acid compounds, there can be mentioned dicarboxylic acids such as succinic acid, adipic acid, polyalkenylsuccinic acids, dimer acids of polymeric fatty acids, 1,3-cyclohexanedicarboxylic acid, 1,4-cyclohexanedicarboxylic acid, terephthalic acid, isophthalic acid and phthalic acid; tri- or higher-carboxylic acids such as trimellitic acid, pyromellitic acid, tricarballylic acid, camphoric acid, trimesic acid and trimer acids of polymeric fatty acids; and their esters and anhydrides.

Of the polycarboxylic acid compounds, vicinal polycarboxylic acids and anhydrides thereof are used preferably in an amount of at least 70% by weight, more preferably at least 80% by weight and especially preferably at least 90% by weight, based on the weight of the polycarboxylic acid ingredient.

Of the polycarboxylic acid compounds, 3- or 4-alkylhexahydrophthalic acids, 3- or 4-alkyltetrahydrophthalic acids, and their anhydrides are used preferably in an amount of at least 40% by weight, more preferably at least 60% by weight and especially preferably at least 80% by weight, based on the weight of the polycarboxylic acid ingredient. Especially preferably, these acids and anhydrides, wherein the alkyl group is a methyl group, are used in an amount of this range.

The polyhydric alcohol ingredient used in the present invention comprises as principal ingredients an alkylene glycol having 2 or 3 carbon atoms and a tetrahydric or higher-hydric alcohol. The alkylene glycol having 2 or 3 carbon atoms is ethylene glycol or propylene glycol. If desired, these two glycols may be used in combination. Of these two glycols, propylene glycol is preferable because a polyester of a desired glass transition temperature can easily be produced. As specific examples of the tetrahydric or higher-hydric alcohol, there can be mentioned diglycerol, polyglycerol, pentaerythritol, ditrimethylolpropane and dipentaerythritol. Of these tetrahydric or higher-hydric alcohols, dipentaerythritol is preferable because a polyester having a high hydroxyl value, which is a high-performance modifier for a polymer, can be produced with a high efficiency.

In the present invention, other alcohols may be used in combination with the above-mentioned polyhydric alcohol ingredient provided that the effect of the invention can be obtained. As specific examples of such alcohols, there can be mentioned dihydric alcohols such as 1,4-cyclohexanedimethanol, diethylene glycol, dipropylene glycol, tripropylene glycol, 2,2-dimethyl-1,3-propanediol, 2,2-diethyl-1,3-propanediol and 2-ethyl-2-butyl-1,3-propanediol; and trihydric alcohols such asglycerol, 2-methylpropanetriol,2-methyl-1,2,4-butanetriol, trimethylolethane, trimethylolpropane and 1,3,5-trihydroxymethylbenzene.

Of the polyhydric alcohol ingredient, the alkylene glycol having 2 or 3 carbon atoms is used preferably in an amount of 50 to 70% by weight, more preferably 55 to 75% by weight and especially preferably 60 to 80% by weight, based on the weight of the polyhydric alcohol ingredient. When the amount of the alkylene glycol is too small, a shaped article of polyolefin or other polymer having a resulting polyester incorporated therein occasionally has poor mechanical strength. The tetrahydric or higher-hydric alcohol is used preferably in an amount of 5 to 30% by weight, more preferably 7 to 25% by weight and especially preferably 10 to 20% by weight, based on the weight of the polyhydric alcohol ingredient. Especially preferably dipentaerythritol is used in this amount.

In the case when the above-mentioned polycarboxylic acid ingredient is polycondensed with the above-mentioned polyhydric alcohol ingredient, other compounds capable of being polycondensed therewith can be used in an amount such that the effect of the present invention can be obtained.

To obtain a polyester having desired high molecular weight and high hydroxyl value, the reactants are used preferably in amounts such that the ratio of X/Y is at least 1, more preferably in the range of 1.01 to 1.5 and especially preferably 1.03 to 1.2, wherein X is the total number of hydroxyl value of the alcoholic reactive groups contained in the polyhydric alcohol ingredient, and Y is the total number of acid value of the carboxylic acid reactive groups contained in the polycarboxylic acid ingredient. Herein, the alcoholic reactive group means an alcoholic hydroxyl group capable of forming an ester group, and the carboxylic acid reactive group means a carboxyl group or an acid anhydride group which are capable of forming an ester group.

The polycondensation reaction can be carried out by a procedure of the conventional polycondensation for esterification. The reaction temperature is preferably in the range of 100 to 300°C, more preferably 125 to 290°C and especially preferably 150 to 280°C. The reaction pressure is preferably in the range of 0.1 to 500 mmHg, more preferably 0.5 to 200 mmHg and especially preferably 1 to 50 mmHg. The reaction is preferably carried out in the presence of an inert gas. If desired, a water-insoluble organic solvent capable of forming an azeotropic mixture with water, such as toluene or xylene, may be used.

An esterification catalyst can be used for the polycondensation. As specific examples of the esterification catalyst, there can be mentioned Brφnsted acids such as paratoluenesulfonic acid, sulfuric acid and phosphoric acid; organic metal compounds such as calcium acetate, zinc acetate, zinc stearate, alkyltin oxides and organotitanium compounds; metal oxides such as tin oxide, antimony oxide and titanium oxide; and heteropolyacids and salts thereof.

As specific examples of the organotitanium compound which is an organometallic compound, there can be mentioned tetraalkoxytitanium compounds such as tetraisopropoxytitanium and tetra-n-butoxytitanium; and titanium chelate compounds such as diisopropoxybis(acetylacetonato)titanium, isopropoxy(2-ethyl-1,3-hexanediolato)titanium and titanium oxyacetylacetonato.

Heteropolyacids are polyacids made by condensation of inorganic acids and formed from at least two metals, and, as specific examples thereof, there can be mentioned tungstophosphoric acid, tungstosilicic acid, tungstoboric acid, tungstogermanic acid, tungstocobaltic acid, tungstoferric acid, tungstotitanic acid, tungstoarsenic acid, molybdophosphoric acid, molybdosilicic acid, molybdoboric acid, molybdogermanic acid, molybdoceric acid and molybdotungstophosphoric acid.

Salts of heteropolyacids include, for example, acidic metal salts and acidic onium salts. As specific examples of the acidic metal salts, there can be mentioned salts of alkali metals such as sodium, potassium, rubidium and cesium; salts of metals of group II of the periodic table, such as beryllium and magnesium; salts of alkaline earth metals such as calcium, strontium and barium; salts of transition metals such as copper, silver, zinc and mercury; and salts of typical elements such as aluminum, thallium, tin and lead. As specific examples of the acidic onium salts, there can be mentioned salts of ammonium and amines; and phosphonium salts.

The esterification catalyst is used preferably in an amount of 10 to 5,000 ppm, more preferably 50 to 2,500 ppm and especially preferably 100 to 1,000 ppm, based on the total weight of the polycarboxylic acid ingredient and the polyhydric alcohol ingredient. When the amount of catalyst is too large, a resulting polyester is occasionally deeply colored.

The modifier for a polymer of the present invention comprises the above-mentioned polyester as an effective ingredient. The content of the polyester in the modifier is preferably in the range of 1 to 100% by weight, more preferably 5 to 90% by weight and especially preferably 10 to 70% by weight, based on the modifier. If desired, the modifier can have an ingredient, an organic solvent and an emulsifier, incorporated therein, which are selected from those recited below for a polymer composition of the present invention.

The modifier for a polymer may be in any form selected from a powder, a particle, a pellet, a solution in an organic solvent, a dispersion in a poor solvent, an emulsion prepared by using an emulsifier, and a master batch prepared by mixing the modifier together with a polymer other than the above-mentioned polyester.

The polymer composition of the present invention comprises the above-mentioned modifier for polymer and a polymer to be modified. The content of the modifier for polymer is preferably in the range of 0.01 to 50 parts by weight, more preferably 0.1 to 30 parts by weight and especially preferably 1 to 25 parts by weight, based on the weight of the polymer composition.

The polymer to be modified which is a principal ingredient of the polymer composition is not particularly limited, and includes, for example, thermoplastic resins, synthetic rubbers and natural rubber.

As specific examples of the thermoplastic resin, there can be mentioned polyolefin resins, polystyrenic resins, polyacrylic resins, polyphenylene-ether resins, polyester resins, polycarbonate resins, polyacetal resins, polyamide resins, modified polyphenylene-oxide resins, polybutylene terephthalate resin, polysulfone resins and polyphenylene sulfide resin. Of these, thermoplastic hydrocarbon polymer resins such as polyolefin resins and polystyrenic resins are preferable. Polyolefin resins are especially preferable because the modifier exhibits a remarkable modifying effect.

The poyolefin resins are not particularly limited, and, as specific examples thereof, there can be mentioned α-olefin homopolymers such as polyethylene, polypropylene, poly(butene-1), poly(pentene-1), poly(hexene-1), poly(4-methylpentene-1) and poly(octene-1); copolymers of at least two α-olefin monomers such as an ethylene-propylene copolymer; modified polyolefin resins such as α-olefin homopolymers and copolymers, to which acrylic acid or an α,β-unsaturated carboxylic acid such as maleic acid or its anhydride has been graft-copolymerized or block-copolymerized; and copolymers of an α-olefin monomer with other copolymerizable monomer or monomers, such as an ethylene-acrylic acid copolymer, an ethylene-methacrylic acid copolymer, an ethylene-crotonic acid copolymer, an ethylene-maleic acid copolymer, an ethylene-acrylic acid ester copolymer, an ethylene-methacrylic acid ester copolymer and an ethylene-vinyl acetate copolymer. Of these, copolymers having ethylene units or propylene units as the principal structural units are preferable. Copolymers having propylene units as the principal structural units are more preferable. An ethylene-propylene copolymer is especially preferable. Especially preferable copolymers having propylene units as the principal structural units contain at least 50% by weight, more preferably at least 70% by weight and especially preferably at least 90% by weight of propylene units, based on the weight of the copolymers.

The synthetic rubber to be modified is also not particularly limited, and, as specific examples thereof, there can be mentioned conjugated diene polymer rubbers such as polyisoprene rubber, polybutadiene rubber, a butadiene-isoprene copolymer rubber and chloroprene rubber; aromatic vinyl-conjugated diene random copolymer rubbers such as a styrene-butadiene random copolymer rubber, a styrene-isoprene random copolymer rubber and a styrene-isoprene-butadiene random copolymer rubber; aromatic vinyl-conjugated diene block copolymer rubbers and hydrogenation products thereof; an acrylonitrile-butadiene copolymer rubber and a hydrogenation product thereof; copolymer rubbers of a conjugated diene monomer with other copolymerizable monomer or monomers; modified polyethylene rubbers such as a chlorinated polyethylene rubber and a chlorosulfonated polyethylene rubber; α-olefin copolymer rubbers and modified products thereof; and acrylic rubbers, silicone rubbers and fluororubbers. Of these, aromatic vinyl-conjugated diene block copolymer rubbers and hydrogenation products thereof, modified polyethylene rubbers, α-olefin copolymer rubbers and modified products thereof, and silicone rubbers are preferable. α-olefin copolymer rubbers are especially preferable.

The α-olefin copolymer rubbers include, for example, copolymer rubbers of ethylene with α-olefin such as propylene, 1-butene, 1-pentene, 1-hexene, 3-methyl-1-butene or 4-methyl-1-pentene, and copolymer rubbers of ethylene with α-olefin and other copolymerizable third monomer or monomers. As specific examples of the third monomer, there can be mentioned conjugated dienes such as butadiene and isoprene; and non-conjugated dienes such as ethylidenenorbornene, dicyclopentadiene and 1,4-hexadiene. Of these, non-conjugated dienes are preferable. Ethylidenenorbornene is especially preferable. In the case of the α-olefin copolymer rubbers containing the third monomer or monomers, the content of the third monomer or monomers is preferably not larger than 50% by weight, more preferably not larger than 40% by weight and especially preferably not larger than 20% by weight, based on the weight of the copolymer.

As specific examples of the α-olefin copolymer rubbers, there can be mentioned an ethylene-propylene copolymer rubber, an ethylene-butene-1 copolymer rubber, a propylene-butene-1 copolymer rubber, ethylene-propylene-conjugated diene copolymer rubbers, isobutylene-conjugated diene copolymer rubbers and ethylene-propylene-conjugated diene copolymer rubbers. Of these, an isobutylene-isoprene copolymer rubber and an ethylene-propylene-ethylidenenorbornene copolymer rubber are preferable.

If desired, the polymer composition can have various ingredients incorporated therein, provided that the effect of the invention is substantially manifested. The ingredients include, for example, an antioxidant, an ultraviolet absorber, an antistatic agent, an inorganic pigment, a colorant, a filler, a dispersant, a wax, a plasticizer, a foaming agent, a crosslinking agent, a flame retardant, an oil, a dehydrating agent and a crosslinking aid.

The procedure for preparing the polymer composition is not particularly limited, and a conventional procedure may be employed. For example, a polymer to be modified, the modifier for polymer, and other optional ingredients can be mixed together by using, for example, a Henschel mixer, an extruder, a Banbury mixer, a Brabender, a plastomill or a roll. When a synthetic rubber or natural rubber is used as the polymer to be modified, the polymer composition can be prepared by a conventional procedure widely used in the rubber industry. That is, materials, other than a crosslinking agent and a crosslinking aid, which are capable of reacting due to heat, are first kneaded together, and then, the crosslinking agent and the crosslinking aid are added and kneaded together at a temperature at which the crosslinking agent and the crosslinking aid are incapable of reacting.

The shaped article of the present invention is made by shaping the above-mentioned polymer composition. The shaping procedure may be conventional, and includes, for example, injection molding, blow molding, extrusion, compression molding and rotation molding. The shaped article can be of any shape. The molding conditions can appropriately be chosen depending upon the kind of a polymer in the polymer composition. For example, if the polymer is synthetic rubber or natural rubber, there can be employed a procedure wherein a polymer composition is extruded and the extrudate is heated to be thereby crosslinked, a procedure wherein a polymer composition is molded by an appropriate molding machine and then the molding is heated, for example, in an oven to be thereby crosslinked, and a procedure
wherein a polymer composition is subjected to press-molding at a high temperature by using a press whereby molding is effected simultaneously with crosslinking. The heating for crosslinking is preferably carried out at a temperature of 100 to 250°C for a period of 0.05 to 5 hours.

The coated article of the present invention is made by coating a surface of the above-mentioned shaped article with a thermosetting resin. The thermosetting resin applied is not particularly limited provided that it has a film-forming property. The thermosetting resin is applied usually as a coating liquid or adhesive containing the resin. As specific examples of the thermosetting resin, there can be mentioned an acrylic resin, a methacrylic resin, an acryl-modified alkyd resin, an epoxy resin, an acryl-urethane resin, a silicone-modified urethane resin, a polyurethane resin, an alkyd-melamine resin, a polyether-melamine resin, a polyester-melamine resin, an amine-alkyd resin and a cyanoacrylate resin.

The coating liquid is prepared by incorporating optional ingredients such as an organic solvent, a drying oil, a pigment. a plasticizer, a stabilaizer and an aggregate in a thermosetting resin. As preferable examples of the coating liquid, there can be mentioned an epoxy coating liquid, an acryl-urethane coating liquid, a polyurethane coating liquid, an alkyd-melamine coating liquid, a polyester-melamine coating liquid and a polyether-melamine coating liquid. Of these, a polyurethane coating liquid, a polyester-melamine coating liquid and a polyether-melamine coating liquid are especially preferable.

The adhesive is prepared by incorporating an appropriate curing agent and optional ingredients in a thermosetting resin. As preferable examples of the adhesive, there can be mentioned an epoxy adhesive and a urethane adhesive.

The procedure for coating a shaped article with the thermosetting resin is not particularly limited, and includes, for example, a procedure wherein a surface of a shaped article is directly coated with a thermosetting resin and a procedure
wherein a surface of a shaped article is subjected to degreasing and/or primer coating and then coated with a thermosetting resin.

The procedure of applying a thermosetting resin is not particularly limited, and includes, for example, electrostatic coating, spray coating by a spray gun, brush coating and roller coating. The coating may be effected by a two step procedure comprising under-coating and over-coating.

The procedure for curing a coating of thermosetting resin is appropriately chosen depending upon the material and shape of a shaped article, and the properties of a coating liquid. For example, natural drying and heating can be adopted. The manner for heating is also not particularly limited, and, for example, infrared heating and high-frequency heating can be adopted. The thickness of a thermosetting resin coating is appropriately chosen depending upon the particular use of a shaped article. In the case where a coating liquid is applied, the thickness of a film after curing the coating of thermosetting resin is preferably in the range of 1 to 500 µm, more preferably 3 to 200 µm and especially preferably 5 to 100 µm. In the case where an adhesive is applied, the thickness of a filmy adhesive after curing the applied thermosetting resin is preferably in the range of 1 to 1,000 µm, more preferably 5 to 500 µm and especially preferably 10 to 200 µm.

The invention will now be specifically described in detail by the following examples and comparative examples wherein parts and %, which are concerned with a composition, are by weight unless otherwise specified. Properties of a polyester, a polymer composition and a polymer shaped article were evaluated by the following methods.

Weight average molecular weight of polyesters was measured by gel permeation chromatography (GPC) and expressed in terms of that of standard polystyrene.

Hydroxyl value and acid value of polyesters were determined according to the standards described in "Standard Methods for the Analysis of Oils, Fats and Derivatives" (Japan Oil Chemists' Society), items 2, 4, 9, 1-83 and 2-83.

Softening point of polyesters was measured by the ring and ball method according to JIS K 2531. Glass transition temperature (Tg) of polyesters was measured by differential scanning calorimetry (DSC) according to JIS K 7121.

Light transmittance of polyesters was measured as follows. 5 g of a polyester was placed in 95 g of toluene, and the mixture was stirred at 80°C for 1 hour in a nitrogen atmosphere to prepare a solution, and then cooled to 20°C. The cooled solution was left to stand at 20°C for 24 hours in a thermostat. The solution was again stirred, and then, light transmittance was measured by a turbidity meter wherein a tungsten incandescent lamp (6V, 6A) was used as a light source, and a 20 mm square glass cell was used. The light transmittance was expressed as the light transmittance of the solution being 0% in the state wherein a shutter was closed, and that of toluene as used as diluent being 100%.

Melt index (MI) of polymer compositions was measured according to ASTM D 1238 at a temperature of 230°C, a load of 2.16 kg and a pre-heating time of 6 minutes.

Flexural modulus of polymer shaped articles was measured according to JIS K 7203. Test specimens used were prepared by injection molding and had a size of 12.5 mm × 125 mm × 6 mm (thickness). 48 hours after the injection molding, the measurement was carried out at a temperature of 23°C and a cross-head speed of 3 mm/min.

Impact strength of polymer shaped articles was measured according to JIS K 7110. Test specimens used were prepared by injection molding and had a size of 12.5 mm × 63.5 mm × 6 mm (thickness). The measurement was carried out at a temperature of -30°C on notched specimens.

Heat distortion temperature of polymer shaped articles was measured according to JIS K 7207. Test specimens used were prepared by injection molding and had a size of 12.5 mm × 63.5 mm × 6 mm (thickness). The measurement was carried out after the specimens were left to stand at a temperature of 100°C for 1 hour.

Adhesion of a coating film of coated articles was measured as follows. An urethane metallic coating liquid (two-coat one-bake coating liquid, tradename "RB-212" [under-coat] and "RB-288" [over-coat], available from Nippon Bee Chemical Co., Ltd.) was diluted with a thinner to a predetermined viscosity of 10 to 12 seconds/Iwata cup NK-2. A specimen having a size of 50 mm × 80 mm × 3 mm (thickness), prepared by injection molding, was spray-coated with each of the two diluted coating liquids by using a spray gun having a nozzle diameter of 1.0 to 1.3 mm at a spray pressure of 3.5 to 5.0 kg/cm². Each wet coating was left to stand at a temperature of 80°C for 30 minutes and then at a temperature of 25°C for 24 hours whereby the coating was dried and cured to give a coated article. The amounts of the two diluted coating liquids were such that the under-coating and the over-coating had a thickness of 10 µm and 20 µm, respectively, as measured after the coatings were dried and cured.

A cross cut adhesion test was conducted on the coated article according to JIS K 5440. That is, the coated surface of the coated article was scored by drawing scored parallel lines to form a lattice pattern with 100 squares. A self-adhesive tape available from Nichiban K.K. was adhered on the lattice pattern, and then, rapidly peeled at a peeling angle of 90°. The adhesion of the coating film was evaluated by the percentage of the number of squares remaining without separation per 100 squares. The larger the percentage of the number of squares remaining without separation, the better the adhesion of coating film.

Resistance to a solvent of a coating film of coated articles was measured as follows. A coated article was made by the same procedure as that described above for the cross cut adhesion test, except that the amounts of the two diluted coating liquids were such that the under coating and the over coating had a thickness of 30 µm and 20 µm, respectively, as measured after the coatings were dried and cured. A square specimen having a size of 15 mm × 30 mm × 3 mm (thickness) was cut out from the coated article so that the cross-section was equally exposed, and then the peripheral edges of the specimen were beveled. The specimen was immersed in a bath of thinner at a temperature of 23°C. The resistance to solvent of the coating film was expressed by the period of time (seconds) from the immersion in the bath of thinner to the time at which commencement of partial separation of the coating film was observed. The larger the period of time, the better the solvent resistance of the coating film.

Adhesion of a coating of coated article was measured as follows. A specimen of a coated article was made by the same procedure as that described above for the cross cut adhesion test, except that the specimen had a size of 20 mm × 150 mm × 2 mm (thickness). A gauze was adhered on one surface of the specimen through an adhesive layer having a thickness of 50 µm comprised of an intantaneous adhesive ("Aron Alpha", general-purpose instantaneous adhesive, available from TOAGOSEI Co., Ltd.). A strip specimen having a size of 10 mm × 100 mm was punched from the gauze-adhered coated article. One end of the gauze adhered on the strip specimen was peeled and pulled in an opposite direction at an angle of 180° and a separation rate of 200 mm/min, and the maximum strength required for separation was measured. Further, it was confirmed whether the separation occurred at the interface between the surface of the shaped article and the coating film, or the separation occurred due to breakage of the surface layer of the shaped article. When the maximum strength was large and the separation occurred due to breakage of the surface layer of the shaped article, the adhesion between the surface of the shaped article and the coating film is sufficiently high.

Rate of vulcanization was expressed in terms of vulcanization time Tc(95) calculated from a torque-vulcanization time curve prepared according to JIS K 6300-1944 using a disc-rheometer ("ASTM-100 type" available from Toyo Seiki K.K.) at a temperature of 160°C.

Breaking strength and breaking elongation were measured on a #3 dumbbell specimen by a tensile test according to JIS K 6301-1995.

### Example 1

A three-necked flask equipped with a stirrer, a thermometer, a reflux condenser, a water-separating tube and a nitrogen gas supplying tube was charged with 200 g of cis-3-methyl-4-cyclohexene-cis-,cis-1,2-dicarboxylic anhydride and 50 g of trans-3-methyl-4-cyclohexene-cis-,cis-1,2-dicarboxylic anhydride as polycarboxylic acid ingredients, 118.4 g of propylene glycol and 20.8 g of dipentaerythritol as polyhydric alcohol ingredients, and 0.14 g of 12-tungsto(VI)-phosphoric acid hydrate as an esterification catalyst. The ratio of X/Y was 1.1, wherein X is the total number of hydroxyl value of the alcoholic reactive groups contained in the polyhydric alcohol ingredients, and Y is the total number of acid value of the carboxylic acid reactive groups contained in the polycarboxylic acid ingredient.

Nitrogen gas was blown into the flask while the content was stirred. While water produced during a reaction and unreacted monomers were removed, the reaction was carried out at 180°C for 5 hours. Then 0.1 g of 12-tungsto(VI)-phosphoric acid hydrate was further added and the reaction temperature was elevated to 200°C. The pressure within the flask was gradually reduced to 5 mmHg or lower over a period of 1.5 hours, and the reaction was further continued for 3 hours to give polyester

### A. Properties of polyester A are shown in Table 1.

### Example 2

By procedures similar to those employed in Example 1, a polyester (polyester B) was prepared as follows. 250 g of 4-methyl-4-cyclohexene-cis-,cis-1,2-dicarboxylic anhydride as a polycarboxylic acid ingredient, 118.4 g of propylene glycol and 20.8 g of pentaerythritol as polyhydric alcohol ingredients, and 0.14 g of 12-tungsto(VI)-phosphoric acid hydrate as an esterification catalyst were used. The X/Y ratio was 1.1. By the same procedures as employed in Example 1, the reaction was carried out at 180°C for 5 hours. After 0.1 g of 12-tungsto(VI)-phosphoric acid hydrate was further added, the reaction temperature was elevated to 200°C, the pressure was gradually reduced in a manner similar to in Example 1, and the reaction was further continued for 4.5 hours to give polyester

### B. Properties of polyester B are shown in Table 1.

### Example 3

By procedures similar to those employed in Example 1, a polyester (polyester C) was prepared as follows. 160 g of cis-3-methyl-4-cyclohexene-cis-,cis-1,2-dicarboxylic anhydride, 400 g of trans-3-methyl-4-cyclohexene-cis-,cis-1,2-dicarboxylic anhydride and 240 g of 4-methyl-4-cyclohexene-cis-,cis-1,2-dicarboxylic anhydride as polycarboxylic acid ingredients, 380.8 g of propylene glycol and 59.9 g of dipentaerythritol as polyhydric alcohol ingredients, and 0.43 g of 12-tungsto(VI)-phosphoric acid hydrate as an esterification catalyst were used. The X/Y ratio was 1.1. By the same procedures as employed in Example 1, the reaction was carried out at 180°C for 5 hours. Without addition of an esterification catalyst, the reaction temperature was elevated to 200°C, the pressure was gradually reduced in a manner similar to in Example 1, and the reaction was further continued for 3 hours to give polyester C. Properties of polyester C are shown in Table 1.

### Example 4

By procedures similar to those employed in Example 1, a polyester (polyester D) was prepared as follows. 120 g of cis-3-methyl-4-cyclohexene-cis-,cis-1,2-dicarboxylic anhydride, 60 g of 4-methyl-4-cyclohexene-cis-,cis-1,2-dicarboxylic anhydride and 220 g of 4-methyl-3-cyclohexene-cis-,cis-1,2-dicarboxylic anhydride as polycarboxylic acid ingredients, 183 g of propylene glycol and 32.2 g of dipentaerythritol as polyhydric alcohol ingredients, and 0.22 g of 12-tungsto(VI)-phosphoric acid hydrate as an esterification catalyst were used. The X/Y ratio was 1.05. By the same procedures as employed in Example 1, the reaction was carried out at 180°C for 5 hours. After 0.16 g of 12-tungsto(VI)-phosphoric acid hydrate was further added, in a manner similar to in Example 1, the reaction temperature was elevated to 200°C, the pressure was gradually reduced, and the reaction was further continued for 3 hours to give polyester

### D. Properties of polyester D are shown in Table 1.

### Example 5

By procedures similar to those employed in Example 1, a polyester (polyester E) was prepared as follows. 200 g of cis-3-methyl-4-cyclohexene-cis-,cis-1,2-dicarboxylic anhydride, 80 g of trans-3-methyl-4-cyclohexene-cis-,cis-1,2-dicarboxylic anhydride and 120 g of 4-methyl-4-cyclohexene-cis-,cis-1,2-dicarboxylic anhydride as polycarboxylic acid ingredients, and 173.3 g of propylene glycol and 34.4 g of pentaerythritol as polyhydric alcohol ingredients were used. The X/Y ratio was 1.05. An esterification catalyst was not incorporated in the initial charge. By the same procedures as employed in Example 1, the reaction was carried out at 180°C for 5 hours. After 0.13 g of tetrabutoxytitanium as an esterification catalyst was added, the reaction temperature was elevated to 220°C, the pressure was gradually reduced in a manner similar to in Example 1, and the reaction was further continued for 3 hours to give polyester E. Properties of polyester E are shown in Table 1.

### Example 6

By procedures similar to those employed in Example 1, a polyester (polyester F) was prepared as follows. 250 g of tetrahydrophthalic anhydride as a polycarboxylic acid ingredient, and 123.8 g of propylene glycol and 24.6 g of pentaerythritol as polyhydric alcohol ingredients were used. The X/Y ratio was 1.1. An esterification catalyst was not incorporated in the initial charge. By the same procedures as employed in Example 1, the reaction was carried out at 180°C for 5 hours. After 0.1 g of tetrabutoxytitanium as an esterification catalyst was added, the reaction temperature was elevated to 200°C, the pressure was gradually reduced in a manner similar to in Example 1, and the reaction was further continued for 4 hours to give polyester F. Properties of polyester F are shown in Table 1.

### Example 7

By procedures similar to those employed in Example 1, a polyester (polyester G) was prepared as follows. 250 g of 3,6-endomethylene-cyclohexane-1,2-dicarboxylic anhydride as a polycarboxylic acid ingredient, and 118.4 g of propylene glycol and 11.2 g of pentaerythritol as polyhydric alcohol ingredients were used. The X/Y ratio was 1.1. An esterification catalyst was not incorporated in the initial charge. By the same procedures as employed in Example 1, the reaction was carried out at 180°C for 5 hours. After 0.1 g of tetrabutoxytitanium as an esterification catalyst was added, the reaction temperature was elevated to 200°C, the pressure was gradually reduced in a manner similar to in Example 1, and the reaction was further continued for 4.5 hours to give polyester G. Properties of polyester G are shown in Table 2.

### Example 8

By procedures similar to those employed in Example 1, a polyester (polyester H) was prepared as follows. 320 g of cis-4-methylcyclohexane-1,2-dicarboxylic anhydride and 80 g of trans-4-methylcyclohexane-1,2-dicarboxylic anhydride as polycarboxylic acid ingredients, 183 g of propylene glycol and 32.2 g of pentaerythritol as polyhydric alcohol ingredients, and 0.22 g of 12-tungsto(VI)-phosphoric acid hydrate as an esterification catalyst were used. The X/Y ratio was 1.05. By the same procedures as employed in Example 1, the reaction was carried out at 180°C for 5 hours. After 0.16 g of 12-tungsto(VI)-phosphoric acid hydrate was further added, the reaction temperature was elevated to 200°C, the pressure was gradually reduced in a manner similar to in Example 1, and the reaction was further continued for 3 hours to give polyester

### H. Properties of polyester H are shown in Table 2.

### Example 9

By procedures similar to those employed in Example 1, a polyester (polyester I) was prepared as follows. 80 g of cis-3-methyl-4-cyclohexene-cis-,cis-1,2-dicarboxylic anhydride, 200 g of trans-3-methyl-4-cyclohexene-cis-,cis-1,2-dicarboxylic anhydride and 120 g of 4-methyl-4-cyclohexene-cis-,cis-1,2-dicarboxylic anhydride as polycarboxylic acid ingredients, and 161.1 g of ethylene glycol and 39.4 g of pentaerythritol as polyhydric alcohol ingredients were used. The X/Y ratio was 1.20. An esterification catalyst was not incorporated in the initial charge. By the same procedures as employed in Example 1, the reaction was carried out at 180°C for 5 hours. After 0.13 g of tetrabutoxytitanium as an esterification catalyst was added, the reaction temperature was elevated to 220°C, the pressure was gradually reduced in a manner similar to in Example 1, and the reaction was further continued for 3 hours to give polyester I. Properties of polyester I are shown in Table 2.

### Comparative Example 1

By procedures similar to those employed in Example 1, a polyester (polyester J) was prepared as follows. 200 g of cis-3-methyl-4-cyclohexene-cis-,cis-1,2-dicarboxylic anhydride and 50 g of trans-3-methyl-4-cyclohexene-cis-,cis-1,2-dicarboxylic anhydride as polycarboxylic acid ingredients, and 131.7 g of propylene glycol and 0.08 g of hydroquinone as polyhydric alcohol ingredients were used. The X/Y ratio was 1.15. An esterification catalyst was not incorporated in the initial charge. The reaction was carried out at 230°C for 5 hours. Then, in a manner similar to in Example 1, the pressure was gradually reduced and the reaction was further continued for 3 hours to give polyester J. Properties of polyester J are shown in Table 2.

### Comparative Example 2

By procedures similar to those employed in Example 1, a polyester (polyester K) was prepared as follows. 200 g of cis-3-methyl-4-cyclohexene-cis-,-cis-1,2-dicarboxylic anhydride and 50 g of trans-3-methyl-4-cyclohexene-cis-,-cis-1,2-dicarboxylic anhydride as polycarboxylic acid ingredients, 82.1 g of propylene glycol as a polyhydric alcohol ingredient, and 0.02 g of zinc acetate as an esterification catalyst were used. The X/Y ratio was 1.59. By the same procedures as employed in Example 1, the reaction was carried out at 180°C for 6 hours. After 80 g of maleic anhydride and 0.025 g of titaniumoxy-acetylacetonate as an esterification catalyst were added, the pressure was gradually reduced in a manner similar to in Example 1, and the reaction was further continued for 6 hours to give polyester K. Properties of polyester K are shown in Table 2.

### Comparative Example 3

By procedures similar to those employed in Example 1, a polyester (polyester L) was prepared as follows. 800 g of cis-4-methylcyclohexane-1,2-dicarboxylic anhydride and 2,000 g of trans-4-methylcyclohexane-1,2-dicarboxylic anhydride as a polycarboxylic acid ingredient, and 807.5 g of 2-ethyl-2-butyl-1,3-propanediol, 79.5 g of dipentaerythritol and 130 g of cyclohexanedimethanol as polyhydric alcohol ingredients, and 0.25 g of 12-tungsto(VI)-phosphoric acid hydrate as an esterification catalyst were used. The X/Y ratio was 1.15. By the same procedures as employed in Example 1, the reaction was carried out at 180°C for 6 hours. Then 0.16 g of 12-tungsto(VI)-phosphoric acid hydrate was further added, the pressure was gradually reduced in a manner similar to in Example 1, and the reaction was further continued for 3 hours to give polyester L. Properties of polyester L are shown in Table 2.

**Tablel 1**

| | Example | | | | | |
|---|---|---|---|---|---|---|
| | 1 | 2 | 3 | 4 | 5 | 6 |
| Polyester | A | B | C | D | E | F |
| Wt. av. molecular weight | 19500 | 31310 | 18090 | 15450 | 28230 | 26300 |
| Hydroxyl value (mgKOH/g) | 51 | 44 | 54 | 59 | 46 | 45 |
| Acid value (mgKOH/g) | 3.5 | 2.5 | 3.1 | 3.4 | 2.2 | 3.0 |
| Glass transition temp.(°C) | 50.4 | 38.3 | 43.1 | 37.0 | 42.1 | 35.5 |
| Softening temp.(°C) | 98 | 91 | 93 | 88 | 94 | 86 |
| Light transmittance (%) | 99 | 98 | 99 | 100 | 98 | 99 |

**Table 2**

| | Example | | | Comp. Ex. | | |
|---|---|---|---|---|---|---|
| | 7 | 8 | 9 | 1 | 2 | 3 |
| Polyester | G | H | I | J | K | L |
| Wt. av. molecular weight | 13200 | 14980 | 24360 | 4600 | 19300 | 17550 |
| Hydroxyl value (mgKOH/g) | 38 | 52 | 68 | 11 | 1 | 58 |
| Acid value (mgKOH/g) | 2.4 | 2.6 | 2.5 | 23.5 | 19.6 | 5.2 |
| Glass transition temp.(°C) | 58.0 | 42.0 | 30.4 | 30.0 | 20.0 | 30.1 |
| Softening temp.(°C) | 107 | 95 | 92 | 78 | 48 | 80 |
| Light transmittance (%) | 98 | 100 | 100 | 100 | 95 | 100 |

### Examples 10 to 18, Comparative Examples 4 to 7

According to the formulation shown in Table 3 or Table 4, the respective ingredients were mixed together by a Henschel mixer, and then, molten and kneaded at 220°C by a twin-screw extruder to obtain a pellet of a polymer composition. Melt index of the polymer composition was measured. An injection-molded specimen was prepared, and its flexural modulus and impact strength were evaluated. A coated article specimen was prepared, and the adhesion of coating film to the molded specimen and the solvent resistance of coating film were evaluated. The results are shown in Table 3 and Table 4.

**Table 3**

| | Example | | | | | |
|---|---|---|---|---|---|---|
| | 1 | 2 | 3 | 4 | 5 | 6 |
| Formulation of polymer composition (parts) | | | | | | |
| Polyester (kind) | A | B | C | D | E | F |
| (amount) | 3 | 3 | 3 | 3 | 3 | 3 |
| Propylene homopolymer | 67.9 | 67.9 | 67.9 | 67.9 | 67.9 | 67.9 |
| EP copolymer rubber | 19.4 | 19.4 | 19.4 | 19.4 | 19.4 | 19.4 |
| Talc | 9.7 | 9.7 | 9.7 | 9.7 | 9.7 | 9.7 |
| Melt index (g/10 min) | 21 | 20 | 21 | 21 | 20 | 21 |
| Flexural modulus (MPa) | 1290 | 1220 | 1280 | 1240 | 1230 | 1210 |
| Impact strength (KJ/m²) | 6.3 | 6.1 | 6.4 | 6.2 | 6.3 | 6.0 |
| Heat distortion temp.(°C) | 115 | 112 | 115 | 113 | 113 | 113 |
| Coating film adhesion (%) | 100 | 100 | 100 | 100 | 98 | 98 |
| Solvent resistance of | | | | | | |
| coating film (seconds) | 200 | 200 | 250 | 210 | 180 | 190 |

**Table 4**

| | Example | | | Comparative Example | | | |
|---|---|---|---|---|---|---|---|
| | 7 | 8 | 9 | 4 | 5 | 6 | 7 |
| Formulation of polymer composition (parts) | | | | | | | |
| Polyester (kind) | G | H | I | | J | K | L |
| (amount) | 3 | 3 | 3 | - | 3 | 3 | 3 |
| Propylene homopolymer | 67.9 | 67.9 | 67.9 | 70 | 67.9 | 67.9 | 67.9 |
| EP copolymer rubber | 19.4 | 19.4 | 19.4 | 20 | 19.4 | 19.4 | 19.4 |
| Talc | 9.7 | 9.7 | 9.7 | 10 | 9.7 | 9.7 | 9.7 |
| Melt index (g/10 min) | 21 | 22 | 22 | 21 | 27 | 28 | 25 |
| Flexural modulus (MPa) | 1220 | 1210 | 1260 | 1290 | 1010 | 1090 | 1160 |
| Impact strength (KJ/m²) | 5.9 | 6.0 | 5.7 | 6.5 | 4.5 | 4.6 | 5.0 |
| Heat distortion temp.(°C) | 112 | 112 | 112 | 119 | 103 | 105 | 110 |
| Coating film adhesion (%) | 98 | 95 | 98 | 60 | 60 | 60 | 90 |
| Solvent resistance of | | | | | | | |
| coating film (seconds) | 190 | 150 | 180 | 80 | 70 | 80 | 120 |
| Note, Propylene homopolymer: "J-3054 HP" available from Idemistu Pet. Chem. Co., melt flow rate = 42 g/10 min | | | | | | | |
| EP copolymer rubber(ethylene-propylene copolymer rubber): "EBM3021P" available from JSR Corp., melt index = 2.1 g/10 min | | | | | | | |

### Examples 19 to 22, Comparative Examples 8 and 9

Using the ingredients, kinds and amounts of which were shown in Table 5, a polymer composition was prepared as follows. Ingredients, other than sulfur and a vulcanization accelerator, were previously kneaded together at 60°C for 5 minutes by a Banbury mixer. The kneaded mixture was taken from the mixer to a 6 inch roll, and sulfur and a vulcanization accelerator were added to the kneaded mixture, and the resultant mixture was further kneaded was at 60°C. Thus-obtained kneaded mixture of a sheet form was evaluated for its rate of vulcanization expressed in terms of vulcanization time Tc(95). The kneaded mixture was extruded by an extruder having a diameter of 20 mm φ (available from Toyo Seiki K.K., die temperature: 60°C, cylinder temperature: 50°C, revolution rate of rotor: 40 rpm) into a flat sheet. The surface of the flat sheet was coated with a polyurethane coating liquid by a brush in an amount such that the thickness of a dry coating film was 100 µm. The coated sheet was cut into pieces of an appropriate size, and the pieces were heat-treated in a gear oven at 180°C for 18 minutes. The adhesion of coating film expressed by peel strength, tensile strength and elongation were measured on the heat-treated pieces. The results are shown in Table 5.

**Table 5**

| | Example | | | | Comp. Ex | |
|---|---|---|---|---|---|---|
| | 19 | 20 | 21 | 22 | 8 | 9 |
| Formulation of polymer composition (parts) | | | | | | |
| Polyester (kind) | A | B | H | I | | L |
| (amount) | 3 | 3 | 3 | 3 | - | 3 |
| EPDM | 100 | 100 | 100 | 100 | 100 | 100 |
| Carbon black | 130 | 130 | 130 | 130 | 130 | 130 |
| Oil | 60 | 60 | 60 | 60 | 60 | 60 |
| Zinc oxide | 5 | 5 | 5 | 5 | 5 | 5 |
| Stearic acid | 1 | 1 | 1 | 1 | 1 | 1 |
| Soft calcium carbonate | 30 | 30 | 30 | 30 | 30 | 30 |
| Antioxidant | 2 | 2 | 2 | 2 | 2 | 2 |
| Dehydrating agent | 6 | 6 | 6 | 6 | 6 | 6 |
| Sulfur | 1.2 | 1.2 | 1.2 | 1.2 | 1.2 | 1.2 |
| Vulcanization accelerator | | | | | | |
| MBT | 1 | 1 | 1 | 1 | 1 | 1 |
| MBTS | 1 | 1 | 1 | 1 | 1 | 1 |
| TMTD | 0.75 | 0.75 | 0.75 | 0.75 | 0.75 | 0.75 |
| DPPTT | 0.5 | 0.5 | 0.5 | 0.5 | 0.5 | 0.5 |
| Tc(95) (min) | 16.8 | 16.8 | 16.5 | 16.5 | 16.3 | 16.3 |
| Tensile strength (kgf/cm²) | 126 | 127 | 125 | 125 | 125 | 5.0 |
| Elongation (%) | 360 | 370 | 380 | 380 | 380 | 360 |
| Peel strength (kgf/cm) | 1.2 | 1.1 | 1.0 | 1.0 | 0.2 | 0.8 |
| Puptured site upon peeling | S | S | S | S | I | S |
| Note, EPDM is an ethylene-propylene-ethylidenenorbornene copolymer ("EPDM3070" available from Mitsui Petrochem. Co., Ltd.). | | | | | | |

Carbon black is "Seast 116" available from Tokai Carbon K.K. Oil is Dinaprocess PW380 available from Idemistu Kosan Co., Ltd.).

Antioxidant is a polycondensate of 2,2,2-trimethyl-1,2 dihydroquinoline ("Nocrac 224" available from Ouchi Shinko K.K.).

Dehydrating agent is "Vesta PP" available from Inoue Caicium Co., Ltd.

In vulcanization accelerators, MBT is 2-mercaptobenzothiazole. MBTS is dibenzothiazyl disulfide, TMTD is tetramethylthiuram disulfide and DPPTT is dipentamethylenethiuram tetrasulfide.

Ruptured site upon peeling: S: Rupture occurred in a surface layer of the sheet. I: rupture occurred at the interface between the sheet and the polyurethane coating.

In Comparative Examples 1 and 2, polycondensation is effected by using only propylene glycol as a polyhydric alcohol, to give a polyester having a low hydroxyl value. In Comparative Example 3, polycondensation is effected by using hindered glycol and dipentaerythritol as polyhydric alcohols according to the procedure as described in prior art, WO99/51660, to give a polyester having a low glass transition temperature and a low softening point. The polymer compositions comprising these polyesters, prepared in Comparative Examples 5 to 7 and Comparative Example 9, have a high melt index, and shaped articles made therefrom have poor physical properties such as poor flexural strength, and poor adhesion to a thermosetting resin, as compared with polymer compositions prepared in Comparative Examples 4 and 8.

In contrast, when a polycarboxylic acid ingredient comprising as a principal ingredient an alicyclic polycarboxylic acid or its anhydride, which has a carboxyl group at each of adjacent two carbon atoms, is polycondensed with a polyhydric alcohol ingredient comprising as principal ingredients ethylene glycol or propylene glycol and a tetrahydric or higher-hydric alcohol, as described in Examples 1 to 9, desired polyesters can be obtained. The polymer compositions comprising these polyesters, prepared in Examples 10 to 22, and shaped articles made therefrom have physical properties similar to or superior to those of polymer compositions comprising no polyester, prepared in Comparative Examples 4 and 8. In the case where shaped articles made from the polymer compositions of the invention are coated with a thermosetting resin, the resulting coated articles have excellent adhesion between the coating film of the thermosetting resin and the shaped articles, as compared with the adhesion between a shaped article made from a polymer composition comprising no polyester, and a coating film formed from a thermosetting resin on the shaped article.

### Effect of the Invention

When a modifier for polymer, which comprises the polyester of the present invention as a principal ingredient, is incorporated in a polyolefin or other polymers, a polymer composition can be obtained which gives a shaped article exhibiting improved adhesion to a coating film or an adhesive and improved solvent resistance, without reduction of the mechanical strength of the polyolefin or other polymers.

### Industrial Applicability

The modifier for polymer of the present invention can be widely applied to industrial plastics and rubbers. The modifier can improve surface characteristics of shaped articles of a resinous polymer or a rubbery polymer, which include, for example, electrical parts and electronic parts; automobile parts including exterior parts such as bumpers, mud guards, weather strips and glass run channels, and interior parts such as instrument panels, grommets and air bags; packaging materials such as bags, packaging sheet, beverage vessels and cosmetic vessels; sport goods such as sport shoes and golf balls; waterproof sheet, gaskets and sealing materials. Further, the modifier for polymer of the invention can improve adhesion of emulsion adhesives and printing capability of aqueous inks, and has a function of compatibilizing different molecules.

## Claims

1. A polyester which is obtained by polycondensing a polycarboxylic acid ingredient with a polyhydric alcohol ingredient, wherein said polycarboxylic acid ingredient comprises as a principal ingredient a polycarboxylic acid compound selected from alicyclic polycarboxylic acids and anhydrides thereof, which have a carboxyl group at each of two adjacent carbon atoms, and said polyhydric alcohol ingredient comprises as principal ingredients an alkylene glycol having 2 or 3 carbon atoms and a tetrahydric or higher-hydric alcohol; and said polyester has a weight average molecular weight in the range of 10,000 to 200,000, a hydroxyl value in the range of 30 to 200 mgKOH/g, an acid value of not larger than 5 mgKOH/g and a glass transition temperature in the range of 35 to 60°C.

2. The polyester according to claim 1, which has a softening point of 10°C or higher.

3. The polyester according to claim 1 or 2, wherein the polycarboxylic acid ingredient comprises at least 70% by weight, based on the weight of the polycarboxylic acid ingredient, of the polycarboxylic acid compound.

4. The polyester according to claim 3, wherein the polycarboxylic acid compound is selected from alicyclic dicarboxylic acids and anhydrides thereof.

5. The polyester according to any one of claims 1 to 4, wherein the polycarboxylic acid ingredient comprises at least 40% by weight, based on the weight of the polycarboxylic acid ingredient, of a polycarboxylic acid compound selected from 3-alkylhexahydrophthalic acids, 4-alkylhexahydrophthalic acids, 3-alkyltetrahydrophthalic acids, 4-alkyltetrahydrophthalic acids, and anhydrides thereof.

6. The polyester according to any one of claims 1 to 5, wherein the polyhydric alcohol ingredient comprises, based on the weight of the polyhydric alcohol ingredient, 50 to 70% by weight of an alkylene glycol having 2 or 3 carbon atoms, 5 to 30% by weight of a tetrahydric or higher-hydric alcohol, and the remainder of other alcohol.

7. The polyester according to claim 6, wherein the alkylene glycol having 2 or 3 carbon atoms is a propylene glycol and the tetrahydric or higher-hydric alcohol is dipentaerythritol.

8. A modifier for a polymer, which comprises as an effective ingredient the polyester as claimed in any one of claims 1 to 7.

9. A polymer composition comprising a resinous polymer or a rubbery polymer, and the modifier for a polymer, as claimed in claim 8.

10. The polymer composition according to claim 9,
wherein the amount of the modifier for a polymer is in the range of 0.1 to 50 parts by weight, based on 100 parts by weight of the resinous polymer or rubbery polymer.

11. A shaped article made by shaping the polymer composition as claimed in claim 9 or 10.

12. A coated article made by coating a surface of the shaped article, as claimed in claim 11, with a thermosetting resin.

13. The coated article according to claim 12, wherein said coating is carried out by applying a coating liquid or adhesive comprising the thermosetting resin.

14. The coated article according to claim 13, wherein the coating liquid is an acryl-urethane coating liquid, an alkyd-melamine coating liquid, a polyester-melamine coating liquid or a polyether-melamine coating liquid.

15. The coated article according to claim 13, wherein the adhesive is an epoxy adhesive or a urethane adhesive.
